# EUROPÄISCHE PATENTSCHRIFT

(11) **EP 3 313 631 B1**
(45) Veröffentlichungstag und Bekanntmachung des Hinweises auf die Patenterteilung: **24.04.2024**
(21) Anmeldenummer: 16731874.0
(22) Anmeldetag: 22.06.2016
(51) Int. Cl.: B28B 1/00

(54) **VERFAHREN ZUR LASERINDUZIERT ADDITIVEN ERZEUGUNG EINES GRÜNKÖRPERS MITTELS SCHLICKERGUSS**
METHOD FOR THE ADDITIVE LASER-INDUCED PRODUCTION OF A MAIN PART BY MEANS OF SLIP CASTING
PROCÉDÉ DE FABRICATION ADDITIVE D'UNE PIÈCE CRUE, INDUITE PAR LASER, PAR COULAGE EN BARBOTINE

(30) Priorität: 26.06.2015 DE 102015110360
(43) Veröffentlichungstag der Anmeldung: 02.05.2018
(73) Patentinhaber: Alumina Systems GmbH, 96257 Redwitz (DE)
(72) Erfinder: MÜHLER, Thomas, 38678 Clausthal-Zellerfeld (DE); HEINRICH, Jürgen, 95100 Selb (DE); GÜNSTER, Jens, 14169 Berlin (DE)
(74) Vertreter: FDST Patentanwälte
(86) Internationale Anmeldenummer: PCT/EP2016/064461
(87) Internationale Veröffentlichungsnummer: WO 2016/207241

(56) Entgegenhaltungen:
- DE-A1- 10 217 670
- US-A1- 2004 075 197
- US-A1- 2006 119 017
- US-B1- 6 531 191
- TANG H H ET AL: "Ceramic laser gelling", JOURNAL OF THE EUROPEAN CERAMIC SOCIETY, ELSEVIER SCIENCE PUBLISHERS, BARKING, ESSEX, GB, Bd. 25, Nr. 5, 1. Februar 2005 (2005-02-01), Seiten 627-632, XP027618264, ISSN: 0955-2219 [gefunden am 2005-02-01]
- THOMAS MÜHLER ET AL: "Slurry-Based Additive Manufacturing of Ceramics", INTERNATIONAL JOURNAL OF APPLIED CERAMIC TECHNOLOGY, Bd. 12, Nr. 1, 1. Januar 2015 (2015-01-01) , Seiten 18-25, XP55295526, US ISSN: 1546-542X, DOI: 10.1111/ijac.12113
- XIAOYONG TIAN ET AL: "Rapid prototyping of porcelain products by layer-wise slurry deposition (LSD) and direct laser sintering", RAPID PROTOTYPING JOURNAL, Bd. 18, Nr. 5, 27. Juli 2012 (2012-07-27), Seiten 362-373, XP55295787, GB ISSN: 1355-2546, DOI: 10.1108/13552541211250364
- ANDRÉ GAHLER ET AL: "Direct Laser Sintering of Al 2 O 3 ?SiO 2 Dental Ceramic Components by Layer-Wise Slurry Deposition", JOURNAL OF THE AMERICAN CERAMIC SOCIETY., Bd. 89, Nr. 10, 1. Oktober 2006 (2006-10-01), Seiten 3076-3080, XP55295508, US ISSN: 0002-7820, DOI: 10.1111/j.1551-2916.2006.01217.x

## Beschreibung

Die Erfindung betrifft ein Verfahren zum formfreien Aufbau dreidimensionaler keramischer Grünkörper. Derartige Verfahren werden auch als generative Verfahren bezeichnet und sind additiven Fertigungsverfahren zuzurechnen.

Ein bekanntes schlickerbasiertes Verfahren ist das Lagenweise Schlicker Deposition (LSD) Verfahren. Hierbei werden keramische Grünschichten über ein an das Foliengießen angelehntes Vorgehen sukzessive aufgebracht und jeweils - gemäß dem Konzept des Selective Laser Sintering (SLS) - mit einem Laser lokal versintert [1-3].

Am Markt befindliche generative Fertigungsverfahren für keramische Bauteile setzen Binderphasen mit einem Anteil an der Schlickermasse von bis zu 60 Volumen-% (Vol%) ein. Ihre Verwendung ist für den optimalen Generierprozeß zwingend erforderlich. Diese Binderphasen sind z.B. vernetzbare Harze, die unvernetzt als flüssige Phase und vernetzt als Kleber für die Keramikpartikel fungieren, z.B. bei der Stereolithographie. Konventionelle keramische Massen, die nur geringe Anteile an organischen Additiven (fachüblich und nachfolgend hier auch als "Organik" bezeichnet) unterhalb eines Anteils von 3 Vol% am Keramikschlicker aufweisen und deshalb wesentlich preisgünstiger sind, sind in aller Regel im Hinblick auf die Qualität des Bauteils nicht oder nur sehr eingeschränkt für additive Fertigungsverfahren einsetzbar. Verfahren, welche die Herstellung keramischer Bauteile in ausreichender Qualität aus rein keramischen Pulvern oder Massen erlauben, gibt es derzeit nur bedingt [3-7]. Es ist auch kein additives Verfahren für den Aufbau von sinterfähigen keramischen Grünkörpern bekannt, die mit konventionell hergestellten Grünkörpern vergleichbar sind. Beispiele für die konventionelle Herstellung von keramischen Grünkörpern sind Schleuderguss und Schlickerdruckguss. In US2004/075197A1 wird ein Verfahren zur additiven Fertigung eines keramischen Grünkörpers mittels selektives Trocknen durch einen Laser beschrieben.

Vor diesem Hintergrund wird ein Verfahren nach Anspruch 1 vorgeschlagen.

Gemäß einer ersten Ausführungsform umfasst das vorgeschlagene Verfahren zur additiven Fertigung eines keramischen Grünkörpers die Schritte:
- Bereitstellen eines Schlickers, umfassend in einer flüssigen Phase suspendierte Partikel eines Keramikgrundmaterials; wobei der Schlicker keine organischen oder anorganischen Additive enthält, welche thermische oder optisch vernetzt oder geliert werden;
- Erzeugen einer Schicht aus dem bereitgestellten Schlicker, bzw., Erzeugen einer Schlickerschicht;
- Ausrichten einer Strahlung einer Laserlichtquelle auf einen Abschnitt der Schlickerschicht;
- Verdampfen von flüssiger Phase aus der Schlickerschicht in dem Abschnitt der Schlickerschicht, auf welchen die Strahlung der Laserlichtquelle ausgerichtet ist oder war - mit anderen Worten ausgedrückt - laserinduziert selektiv abschnittsweises Verdampfen der flüssigen Phase der Schlickerschicht;
- sinterfreies Ausbilden eines Abschnitts des keramischen Grünkörpers in der Schlickerschicht;
- Optionales Wiederholen der Schritte Erzeugen, Ausrichten, Verdampfen und sinterfreies Ausbilden bis der keramische Grünkörper vorliegt;
- Trennen des keramischen Grünkörpers vom Schlicker.

Unter dem Keramikgrundmaterial wird in diesem Zusammenhang die Gesamtheit der Bestandteile des Schlickers verstanden, welche nach dem Sintern die Keramik des gesinterten Bauteils ausbilden. Im Wesentlichen handelt es sich dabei um suspendierte Feststoff-Partikel. Die flüssige Phase umfasst typischerweise Wasser und darin gelöste Hilfsstoffe, wie die für einen konventionellen wasserbasierten keramischen Schlicker üblichen Dispergatoren, Entschäumer, und/oder Bindemittel etc. Optional kann die flüssige Phase aber auch einen Alkohol oder ein aprotisches Lösungsmittel umfassen. Das ist besonders dann von Vorteil, wenn das Keramikgrundmaterial oder ein Bestandteil des Keramikgrundmaterials im Kontakt mit Wasser reagiert oder unerwünschte Veränderungen erfährt. Das vorgeschlagene Verfahren ist damit ausdrücklich nicht auf wässrige Schlicker beschränkt. Mit dem lokal laserinduzierten Verdampfen der flüssigen Phase geht eine lokale Kompaktierung der dispergierten Phase, d.h. des Keramikgrundmaterials einher. Gemäß einer Weiterbildung dieser Ausführungsform ist eine sich in einer Ebene der Schlickerschicht erstreckende Ausdehnung des Abschnitts des sinterfrei ausgebildeten keramischen Grünkörpers größer, als eine korrespondierende Ausdehnung des Abschnitts der Schlickerschicht, auf den die Strahlung der Laserlichtquelle ausgerichtet war.

Vorteile des vorgeschlagenen Verfahrens umfassen einen reduzierten Zeit- und Kostenaufwand zur Herstellung von Grünkörpern, deren Eigenschaften jenen eines mit konventionellen Schlickerguß-Verfahren erzeugten industriell gefertigten Grünkörpers entsprechen. Verfahrensgemäß wird der Grünkörper aus industriell üblichem, an Organik armen (< 3 Vol-%) oder praktisch organikfreiem wässrigen Keramikschlicker hergestellt. Unter "praktisch organikfrei" wird hierbei ein nicht über den Gehalt möglicher organischer Verunreinigungen hinausgehender Gehalt der typischerweise technischen Qualität eingesetzten Keramikgrundmaterialien verstanden.

Gemäß einer weiteren Ausführungsform umfasst das Verfahren weiterhin den Schritt
- Trocknen des keramischen Grünkörpers.

Vorteilhaft weist der Grünkörper eine durchgehend identische Restfeuchte auf, sodass bei einem an die Geometrie des Grünkörpers angepassten Trocknen ein im Wesentlichen gleichmäßiger Trocknungsschrumpf erzielbar und eine Rissbildung zuverlässig vermeidbar ist.

Gemäß einer weiteren Ausführungsform umfasst ein Anteil des Keramikgrundmaterials im verwendeten Schlicker einen Anteil von zumindest 60 Volumen-%, bevorzugt von bis zu 65 Volumen-%, insbesondere von bis zu 70 Volumen-% oder bis zu 74 Volumen-%.

Vorteilhaft ist die Konsistenz eines derartigen Schlickers gelartig oder pastös, sodass Konvektion im Schlickerbett zuverlässig verhindert wird und eine Struktur des unter Einwirkung der Laserstrahlung schrittweise ausgebildeten Grünkörpers während des gesamten Verfahrens zuverlässig mechanisch gestützt ist.

Gemäß einer weiteren Ausführungsform erreicht ein Anteil organischer und/oder anorganischer Hilfsstoffe im Schlicker einen Anteil von bis zu 5 Volumen-%, bevorzugt von maximal lediglich 3 Volumen-% , weiter bevorzugt einen maximalen Anteil von 1 Volumen-%. Idealerweise
enthält der verwendete Keramikschlicker keinerlei organische Hilfsmaterialien. Das macht die zeit- und kostenaufwendigen Entbinderungsschritte bekannter additiver bzw. generativer Verfahren obsolet.

Gemäß einer weiteren Ausführungsform überschreitet ein Anteil organischer Hilfsstoffe im Schlicker, insbesondere in der flüssigen Phase gelöster organischer Dispergatoren, Entschäumer, Binder etc., einen Anteil von 3 Volumen-% nicht und/oder der verwendete wässrige Schlicker ist praktisch frei von organischen Lösungsmitteln und jeglicher Organik. Alternativ zu letzterem umfasst die flüssige Phase ein rückstandsfrei verdunstbares organisches Lösungsmittel. Unter "praktisch frei" wird hierbei ein nicht über den Gehalt möglicher Verunreinigungen hinausgehender Gehalt der typischerweise technischen Qualität eingesetzter Materialien verstanden. Entsprechend wird der Begriff "rückstandsfrei" gebraucht: Die Menge eines nach dem Verdunsten zurückbleibenden Rückstandes ist entweder nicht existent oder aber vernachlässigbar gering, da eingesetzte organische Lösungsmittel praktisch frei von Verunreinigungen sind und ebenso keine Organik im hier gebräuchlichen Sinn umfassen - also frei von Benetzungsmitteln, Bindern, Dispergatoren, Entschäumern, Fließhilfen, Plastifikatoren und/oder anderen Additiven sind.

Vorteilhaft ermöglicht das die Herstellung eines auch von Organik praktisch freien oder so doch zumindest armen Grünkörpers. Damit entfällt das Erfordernis eines gesonderten Entbinderungsschrittes vor dem Sintern. An Organik arme oder von Organik praktisch gänzlich freie Schlicker sind kostengünstig, da ein organischer Zusatz allein schon wesentlich höhere Material-Kosten verursacht, als ein industriell üblicher Keramikschlicker, mit nur geringem Anteil an Organik, wie Dispergatoren, Entschäumer, Binder etc., deren Gehalt typischerweise unter 5%, beispielsweise unter 3% liegt.

Gemäß einer weiteren Ausführungsform ist eine Dicke der erzeugten Schlickerschicht ausgewählt unter einer Dicke im Bereich von 25 µm bis 2 mm, einer Dicke im Bereich 50 µm bis 1000 µm, einer Dicke im Bereich 100 µm bis 750 µm oder sie weist einen Wert auf, der zwischen 100 µm bis 600 µm, beispielsweise bei 500 µm liegt.

Vorteile ergeben sich aus der einerseits erreichbaren hohen Präzision und Oberflächengüte des erhaltenen Grünkörpers gemäß der Struktur des der Steuerung der Laserbelichtungsvorrichtung zu Grunde liegenden virtuellen Slice-Modells. In Abhängigkeit von der Geometrie des gewünschten Grünkörpers können Schlickerschichten unterschiedlicher Dicke übereinander ausgebracht und jeweils laserinduziert strukturiert werden.

Gemäß einer weiteren Ausführungsform ist die Laserlichtquelle eingerichtet ist, eine Strahlung in einem Wellenlängenbereich von 520 nm bis 10 µm abzugeben. Hierbei wird unter einer Laserlichtquelle eine solche Quelle verstanden, die kohärentes Licht einer vorbestimmten Wellenlänge gerichtet abgeben kann.

Vorteile ergeben sich aus der breiten Palette kommerziell verfügbarer Laserlichtquellen, Festkörperlaser, Gas-Laser, Laser-Dioden, Hochleistungslaserdioden, Faserlasern, Excimer-Lasern, im Wellenlängenbereich des IR oder des NIR emittierende Lasern, CO₂-Lasern sowie zu deren gerichteten Ausrichtung, Modulation, Ablenkung oder Führung verwendbarer Optiken und Steuerelemente (Blenden, Shutter, Spiegel etc.). Hierbei sind die Laserlichtquellen und/oder zugehörige Steuerelemente und/oder Optiken so eingerichtet, dass die jeweils abgestrahlte Laserenergie kontinuierlich oder gepulst auf der Schlickerschicht auftrifft. Daraus ergibt sich eine große Flexibilität von zur Optimierung des Verfahrens verwendbaren Parametern (z.B. Wellenlänge, Leistung, Leistungsdichte, Pulsfrequenz, Fortschrittsgeschwindigkeit bzw. der Verweilzeit eines Laserspots auf oder in der Schicht.

Gemäß einer weiteren Ausführungsform ist die Laserlichtquelle eingerichtet, eine Strahlung zumindest einer Wellenlänge im Wellenlängenbereich von 600 nm bis 3 µm abzugeben. Alternativ und/oder zusätzlich ist die Laserlichtquelle so eingerichtet, dass von einer auf der Schlickerschicht auftreffenden Laserstrahlung ein möglichst hoher Anteil direkt an die flüssige Phase des Schlickers, bei wasserbasierten Schlickern also an das Wasser, ankoppelt. Hierdurch wird die flüssige Phase erhitzt und verdampft. Unter einem Ankoppeln wird dabei verstanden, dass die Laserenergie von der flüssigen Phase / bzw. dem Dispersionsmedium / absorbiert wird. Bevorzugt werden zumindest mehr als 1 %, beispielsweise mehr als 30 %, insbesondere mehr als 50 % der auftreffenden Laserleistung von der jeweils vorliegenden flüssigen Phase absorbiert und führen zu deren lokal begrenztem Verdampfen.

Vorteile dieser Ausführungsform erwachsen aus der Anpassbarkeit an unterschiedliche, und ggf. auch unterschiedlich gefärbte Keramikgrundmaterialien des Schlickers. Es kann ein solcher Laser bzw. ein zur lokalen Erwärmung der Schlickerschicht angepasster Wellenlängenbereich der Laserstrahlung ausgewählt werden, der es erlaubt, die flüssige Phase im Wesentlichen selektiv zu erhitzen und so zu verdampfen, die Partikel des Keramikgrundmaterials dabei aber nur unwesentlich zu erwärmen, in keinem Falle aber sie zu sintern.

Gemäß einer weiteren Ausführungsform ist die Laserlichtquelle ausgewählt und/oder eingerichtet, sodass eine Strahlung zumindest einer Wellenlänge im Wellenlängenbereich von 1970 nm ± 100 nm abgebbar ist.

Vorteile ergeben sich aus der kommerziellen Verfügbarkeit, beispielsweise von Thulium-Faserlasern, die angepasst sind, eine einstellbare Energie ausreichender Energiedichte in wässrige Medien, wie eine Keramikschlickerschicht einzukoppeln.

Gemäß einer weiteren Ausführungsform ist die Laserlichtquelle ausgewählt unter einem NdYAG-Laser, einem Thulium-Faserlaser und/oder einer Laserdiode.

Vorteile erwachsen zum Beispiel mit der vereinfachten Handhabbarkeit eines Faserlasers auch für große Verfahrwege, beispielsweise Verfahrwege eines Laserspots über eine Länge von > 1 m auf / in der Schlickerschicht.

Gemäß einer weiteren Ausführungsform umfasst der Schritt "Ausrichten " ein Fokussieren von Laserstrahlung auf oder in die Schlickerschicht. Alternativ und/oder zusätzlich wird ein ausgerichteter und/oder fokussierter Laserstrahl entlang eines Expositionspfades geführt, wobei der Expositionspfad auf oder in der Schlickerschicht verläuft. Gemäß einer optionalen Weiterbildung dieser Ausführungsform kann die Lage des Fokus dabei nicht nur in einer Ebene der Schicht lateral, sondern auch orthogonal zu dieser wechseln bzw. variiert werden.

Vorteile ergeben sich mit der gezielten Abstimmung der Wellenlänge der verwendeten Laserstrahlung und der applizierten Leistung, respektive einer erzielbaren Eindringtiefe bzw. einer effektiven Einkopplung der auftreffenden Laserleistung in die flüssige Phase des Keramikschlickers mit einem jeweiligen Absorptionskoeffizienten der flüssigen Phase und einem jeweiligen Absorptionskoeffizienten der Bestandteile des Keramikgrundmaterials und/oder einem Streulichtanteil in dem betreffenden Wellenlängenbereich bei der gegebenen mittleren Partikelgrößenverteilung des Keramikgrundmaterials. Diese Abstimmung erlaubt es, die flüssige Phase ortsselektiv zu verdampfen und dabei das Keramikgrundmaterial laserinduziert zu kompaktieren und so allmählich den gesamten Grünkörper zu formen.

Gemäß einer weiteren Ausführungsform entspricht der Expositionspfad zumindest abschnittsweise einer geschlossenen und/oder einer unterbrochenen Linie.

Vorteile ergeben sich beispielsweise mit der erreichten Designfreiheit.

Gemäß einer weiteren Ausführungsform ist der Expositionspfad als Raster, als Gitter, als Spirale, als Ellipse, als Kreis, als Linienschar und/oder als Muster darstellbar. Hierbei wird unter einem Muster eine periodische Anordnung geometrischer Elemente oder zumindest eine teilweise Wiederholung einzelner geometrischer Elemente verstanden.

Vorteile erwachsen mit der beschleunigten Fertigung auch ausgedehnter Querschnittsflächen des Grünkörpers.

Gemäß einer weiteren Ausführungsform umfasst eine Größe einer ausgerichteten und/oder fokussierten Laserstrahlung - gewöhnlich als Laserspot bezeichnet - auf der Oberfläche der Schlickerschicht zumindest in einer Richtung einen Wert innerhalb des Bereichs von 25 µm bis 25 mm, insbesondere im Bereich von 40 µm bis 10 mm, bevorzugt im Bereich von 50 µm bis 5 mm, weiter bevorzugt im Bereich von 100 µm bis 3 mm. Hierbei kann eine Kantenlänge oder ein Durchmesser auch einen der Grenzwerte dieser Bereiche umfassen.

Spezielle hiermit erreichbare Vorteile betreffen die Möglichkeit, neben massiven, auch filigrane Grünkörper(abschnitte) laserinduziert erzeugen zu können.

Gemäß einer weiteren Ausführungsform erfolgt eine Bewegung der ausgerichteten und/oder fokussierten Laserstrahlung auf oder in der Schlickerschicht mit einer Geschwindigkeit im Bereich von 1 mm/s bis zu einer Geschwindigkeit von 20 m/s.

Vorteile ergeben sich unmittelbar aus der hohen erreichbaren Prozessgeschwindigkeit zur Strukturierung auch ausgedehnter Schlickerschichten.

Gemäß einer weiteren Ausführungsform bewirkt das verfahrensgemäße Verdampfen eine attraktive Wechselwirkung von Partikeln des Keramikgrundmaterials und/oder das sinterfreie Herausbilden des Abschnitts des Grünkörpers in der Schlickerschicht, wobei die den Abschnitt des Grünkörpers durch Agglomeration ausbildenden Partikel durch die flüssige Phase - selbst bei deren Überschuss - nicht resuspendierbar sind. Im Ergebnis des laserinduzierten Verdampfens entsteht somit ein Scherben.

Neben einer technologischen Vereinfachung ergeben sich Kostenvorteile beispielsweise durch die Anwendbarkeit des Verfahrens auf industriell übliche, sonst für den konventionellen Schlickerguss - beispielsweise mit einer Gipsform verwendete - preisgünstige Schlicker.

Gemäß einer weiteren Ausführungsform strömt nach dem Verfahrensschritt "Verdampfen" kapillarkraftgetriebenes die flüssige Phase aus umgebenden Bereichen des Schlickerbettes in das Partikelaggregat und/oder in den Abschnitt der Schlickerschicht, auf den die Strahlung der Laserlichtquelle ausgerichtet ist oder war.

Daraus resultiert, dass der herausgebildete Grünkörper unmittelbar nach Entnahme aus dem Schlickerbett einen gewissen Feuchtegehalt aufweist und vor dem Sintern trocknen muss. Vorteile dieser Ausführungsform bestehen in einer von der Porengröße abhängigen Kühlung der herausgebildeten Grünkörperstruktur. Wenn die Laserenergie beispielsweise gepulst in die flüssige Phase eingekoppelt wird, kann eine übermäßige Erhitzung des Feststoffanteils des Keramikschlickers vermieden und damit ein teilweise vorzeitiges Sintern zentraler Anteile der Grünkörperstruktur verhindert werden. Durch das sinterfreie Erzeugen des Grünkörpers werden Spannungen beim Trocknen und eine daraus erwachsende Rissbildung zuverlässig vermieden.

Gemäß einer weiteren Ausführungsform werden die Form und/oder der Verlauf des Expositionspfades von Daten eines virtuellen Modells des Grünkörpers mit Hilfe eines sogenannten Slice-Prozesses des Modells abgeleitet bzw. bestimmt.

Spezielle Vorteile umfassen die unmittelbare Kopplung eines rechnergestützen bzw. eines modellgestützten Designprozesses (CAD) mit der Fertigung.

Gemäß einer weiteren Ausführungsform nimmt die Schlickerschicht zumindest eine Fläche 100 mm² ein.

Vorteilhaft ist das Verfahren damit sowohl für die Fertigung eines Einzelstücks (Prototyp), als auch für die Fertigung großer Stückzahlen und damit für die unmittelbare industrielle Fertigung geeignet. Beispielsweise können mit der Vergrößerung der flächigen Ausdehnung der Schlickerschicht parallel große Stückzahlen identischer oder auch unterschiedlich geformter Grünkörper hergestellt werden.

Gemäß einer weiteren Ausführungsform ist eine Projektionsfläche des Expositionspfades zum sinterfreien Ausbilden eines Abschnitts des Grünkörpers in der Schlickerschicht, auf der Schlickerschicht, oder in einer Ebene der Schlickerschicht maximal halb so groß, bevorzugt maximal ein Drittel so groß, wie die Fläche des Querschnitts des jeweils laserinduziert generierten Abschnitts des Grünkörpers in einer Ebene der Schlickerschicht.

Vorteilhaft entfällt damit das Erfordernis anderer lasergestützter Strukturierungstechniken, vollständige Querschnittsflächen oder vollständige äußere Konturen des gewünschten Bauteils zu schreiben.

Gemäß einer weiteren Ausführungsform erreicht die Dichte, des mit dem Verfahren erhältlichen Grünkörpers zumindest 55 % derjenigen Dichte, die ein porenfreier Festkörper, umfassend das keramische Grundmaterial aufweist.

Beispielsweise umfasst ein Porenvolumen des laserinduziert erhaltenen Grünkörpers nicht mehr als 40 %, bevorzugt nicht mehr als 35 % des durch seine äußeren Konturen definierten Gesamtvolumens des Grünkörpers. Der mit dem beschriebenen additiven Herstellungsverfahren laserinduziert generativ erzeugte Grünkörper hat somit vorteilhaft eine solche Dichte, die jener eines konventionell aus einer rein keramischen Masse erzeugten Grünkörpers gleicht. Daraus ergibt sich, dass durch Sintern des Grünkörpers ein hochdichtes keramisches Bauteil bereitgestellt wird, dass sich hinsichtlich seiner thermomechanischen Eigenschaften von einem Sinterkörper eines konventionell mittels Schlickerguss gefertigten Grünkörpers praktisch nicht unterscheidet. Damit entfällt die Notwendigkeit, eine Form bereitzustellen.

Die beschriebenen Ausführungsformen können beliebig miteinander kombiniert werden.

Bei der selektiv abschnittsweisen Exposition einer aus Keramikschlicker erzeugten Schlickerschicht gegenüber einer Laserstrahlung erwies sich überraschend, dass am Ort der Exposition im Ergebnis eines lokalen Verdampfens, bzw. eines lokalen Entzugs der flüssigen Phase des Keramikschlickers ortsselektiv eine irreversible Kompaktierung des Keramikgrundmaterials der Schlickerschicht erfolgt. Dabei erstreckt sich der laserinduziert kompaktierte Bereich der Schlickerschicht über die Ausdehnung des exponierten Abschnitts der Schlickerschicht hinaus: sowohl lateral - in der Schichtebene, als auch orthogonal - in die Tiefe der Schicht(en). Hierbei wird das Keramikgrundmaterial jedoch weder während der Exposition gegenüber der Laserstrahlung, noch während des dabei einsetzenden Kompaktierens gesintert. Hingegen entspricht die Feinstruktur des lokal kompaktierten Abschnitts der Schlickerschicht der typischen Feinstruktur eines keramischen Grünkörpers: Sie weist die für keramische Grünkörper typischen Poren einer kompakten Packung der geometrisch unveränderten ursprünglichen Partikel des Keramikschlickers auf. Mit fortschreitender Strahlungsexposition der Schlickerschicht wächst die Ausdehnung des kompaktierten Abschnitts der Schlickerschicht an bzw. wächst der Grünkörper weiter. Wird der Expositionsbereich verschoben, beispielsweise indem der Fokus der von der Laserstrahlungsquelle gerichtet abgegebenen Strahlung kontinuierlich auf oder in der Schlickerschicht weiter bewegt wird, so wächst auch der hierbei ausgebildete Grünkörper entsprechend der Bewegung des Laserstrahls kontinuierlich weiter. Dieser Vorgang bildet die Grundlage des vorgeschlagenen laserbasiert generativen Herstellungsverfahrens. Ebenso kann die Exposition eines ausgewählten Bereichs der Schlickerschicht auch diskontinuierlich erfolgen, um einen sich kontinuierlich in einer Schlickerschicht erstreckenden Grünkörperabschnitt zu generieren. Hierzu wird der Laserstrahl wiederholt auf ein und dieselben oder eng zueinander benachbarte Bereiche der Schlickerschicht gerichtet.

Bei dem vorstehend beschriebenen Verfahren wird ähnlich zu den in [1] und [2] beschriebenen Verfahren ein keramischer Schlicker zum schichtweisen Aufbau eines Bauteils verwendet. Jedoch wird der Schlicker der jeweiligen Schicht nicht getrocknet, sondern direkt, jeweils nach dem Auftrag einer Schicht hochgefüllten Schlickers, lokal mit Hilfe eines Lasers erwärmt. Unter einem hochgefüllten Schlicker wird in diesem Zusammenhang ein keramischer Schlicker mit einem Anteil von 60, von 70 oder sogar von 74 Vol% keramischen Feststoffanteils verstanden. Bei der lokalen Erwärmung der Schlickerschicht wird die flüssige Phase des Schlickers, bei wasserbasierten Schlickern also Wasser, lokal an der mittels Laserstrahlung erwärmten Stelle der Schicht verdampft.

Dazu erfolgt ein Einkoppeln der Laserenergie bevorzugt in die flüssige Phase, sodass die Keramikpartikel selbst nur unwesentlich erwärmt werden, jedoch in keinem Fall eine Sintertemperatur eines Bestandteils des jeweiligen keramischen Materials erreicht wird. Das lokale Verdampfen des Lösungsmittels bewirkt die lokale Herausbildung eines Grünkörpers, insbesondere zumindest die Herausbildung eines Abschnitts des künftigen, sukzessive und schichtweise aufgebauten, vollständigen Grünkörpers, der nach einem Trocknen und Entnahme aus dem Schlickerbett zum fertigen Bauteil gesintert werden kann.

Nach dem Ausschalten des Lasers liegt an der Stelle der lokal laserexponierten Schicht somit ein Abschnitt des Grünkörpers vor, der vom umgebenden, noch flüssigen Schlicker der Schlickerschicht nicht wieder aufgelöst werden kann.

Die Energie der lokal in die Schlickerschicht eingetragenen Laserstrahlung ist so bemessen, dass keine Sinterung der Keramikpartikel erfolgt. Dazu ist die Wellenlänge der verwendeten Laserlichtquelle(n) so gewählt, dass eine Einkopplung (Absorption) der Energie bevorzugt in das Lösungsmittel, nicht aber in die keramischen Schlickerpartikel erfolgt. Eine für das vorgeschlagene Verfahren geeignete Laserstrahlung weist eine Wellenlänge im Bereich von 520 nm bis 10 µm auf. Bevorzugt liegt eine Wellenlänge der Laserlichtquelle (z.B. Laser, Laserdiode) im Bereich des nahen Infrarot, und reicht beispielsweise von 600 nm bis in den Bereich von 800 nm bis 3 µm. Bevorzugt sind Wellenlängen, bei denen die Laserenergie ohne Weiteres an Wasser ankoppelt. Als besonders vorteilhaft erwies sich eine Laserwellenlänge um 1300 nm oder um 1970 nm. Hierbei soll mit der Angabe "um" ein Bereich von plus/minus 100 nm, insbesondere ein Bereich von plus/minus 50 nm umfasst sein.

Hierbei ist eine höhere Strukturauflösung des herausgebildeten Grünkörpers mit kürzeren Wellenlängen erreichbar, jedoch weist eine höhere Wellenlänge eine entsprechend höhere Eindringtiefe in die Schlickerschicht auf. Das vorgeschlagene Verfahren ist weiter dadurch gekennzeichnet, dass die eingesetzte Wellenlänge, die Intensität der verwendeten Laserstrahlung, die Verweilzeit des Laserstrahls an dem gewählten Abschnitt der Schlickerschicht und somit die insgesamt lokal eingetragene Energie an die jeweilige Schichtdicke der Schlickerschicht angepasst ist.

Eine Weiterbildung des vorgeschlagenen Verfahrens ist dadurch gekennzeichnet, dass die jeweils bevorzugte Wellenlänge angepasst wird an eine Farbe der keramischen Masse, insbesondere an eine Farbe keramischer Partikel. Hierbei wird vorteilhaft ein Einkoppeln der Laserenergie in feste Bestandteile der Schlickerschicht minimiert und eine Einkoppeln in die flüssige Phase des Schlickers, bzw. in das Suspensionsmittel oder in die in praxi als Lösungsmittel bezeichnete Flüssigkeit gesteigert.

Gemäß einer Weiterbildung wird dem Lösungsmittel ein Farbstoff zugesetzt, der das Einkoppeln der Energie der verwendeten Laserstrahlung in die flüssige Phase der Schlickerschicht steigert.

Auf Grund dessen, dass sich die Partikel wegen des durch Verdampfen bzw. Verdunsten bewirkten Lösungsmittelentzugs in dem Grünkörper soweit zueinander annähern, dass eine anziehende Wechselwirkung zwischen benachbarten Partikeln aufgebaut wird, kann der Grünkörper durch das ihn umgebende Lösungsmittel nicht wieder aufgelöst werden. Die große Nähe der Partikel zueinander im Grünkörper steht im Gegensatz zum Zustand der Schlickerpartikel in der Suspension.

In der Suspension, bzw. in einem mit Laserlicht nicht behandelten Abschnitt der Schlickerschicht, weisen die Partikel eine einander abstoßende Wechselwirkung auf. Auf dieser gegenseitigen Abstoßung der Partikel beruht die Stabilität der Suspension. Die abstoßende Wechselwirkung der Schlickerpartikel wirkt einer Sedimentation der Partikel aus der Suspension entgegen. Die Stabilisierung eines Schlickers wird üblicherweise durch geringe Mengen an organischen und/oder anorganischen Additiven eingestellt. Durch die Additive bildet sich eine Schicht aus mehreren Moleküllagen des Lösungsmittels und/oder organischer und/oder anorganischer langkettiger Moleküle (sogenannte sterische Stabilisation) oder eine Schicht aus mehreren Lagen geladener Moleküle des Lösungsmittels und/oder Molekülen des Additivs aus (sogenannte elektrostatische Stabilisierung).

Durch das laserinduziert lokal erfolgende Verdampfen des Lösungsmittels aus der Schlickerschicht, z.B. von Wasser - wenn es sich um einen wässrigen Schlicker handelt - kollabieren diese Stabilisierungsschichten. Damit wird aus einer repulsiven Wechselwirkung der Partikeln der Suspension (des Schlickers) eine attraktive Wechselwirkung. In deren Ergebnis wird in Bereichen der laserinduziert destabilisierten Schlickerschicht ein Partikelaggregat (Festkörper) ausgebildet.

Durch das nachfolgende Auftragen einer weiteren Schlickerschicht und durch das anschließend abschnittsweise (lokale) Verdampfen des Lösungsmittels aus dieser weiteren Schicht kann somit sukzessive ein vollständiger Grünkörper (Bauteil) aufgebaut werden.

Mit anderen Worten ausgedrückt, bildet ein laserinduziert fortschreitend wachsendes Partikelaggregat mit fortschreitender Laserexposition der jeweils gegebenen Schlickerschicht und der optional nachfolgend auf dieser aufgebrachten weiteren Schlickerschichten in einer Schlickerschicht oder einem optional aus schlickerschichtweise ausgebildeten Schlickerbett Lage für Lage einen Grünkörper aus.

Verfahrensgemäß werden somit Abschnitte eines laserinduziert ausgebildeten Grünkörpers schichtweise gemäß der von einem Steuerprogramm an Hand eines Slice-Prozesses vorgebbaren endgültigen Form des Grünkörpers ausgeformt, ohne dass dafür eine Gießform erforderlich ist. Das vorgeschlagene Verfahren ist somit formfrei.

Gemäß einer praktischen Ausführungsform wurde eine Schlickerschicht eines industrieüblichen wässrigen Keramikschlickers (bei einem Feststoffanteil des Keramikgrundmaterials im Schlicker von 70 %) mit einer lateralen Ausdehnung von 100 x 100 mm und einer Dicke von 100 µm bereitet. Ein Thulium-Faserlaser, der angepasst ist, im Wellenlängenbereich von 1800 nm bis 2100 nm eine Laserleistung im Bereich von einigen Zehn bis zu einigen Hundert Watt bereitzustellen, wird so eingerichtet, dass bei einer Wellenlänge von 1970 nm und 50 Watt bei einer variabel wählbaren Spotgröße, beispielsweise einem im Wesentlichen runden Spot eines Durchmessers von 100 µm, die Schlickerschicht lokal exponiert werden kann. Das ausgewählte Areal der Schlickerschicht wird nun gepulst mit einer Wiederholfrequenz von bis 50 - 100 Hz der Laserstrahlung von 1970 nm ausgesetzt. Die Pulse werden durch das wiederholte Abfahren eines Scanmusters des Laserstrahls auf der Schichtoberfläche erzeugt. Eine bis zur vollständigen Ausbildung des entsprechenden laserinduziert erzeugten Abschnitts des Grünkörpers summarisch am exponierten Abschnitt der Schlickerschicht erreichte Verweilzeit des Laserspots lag typischerweise im Bereich von bis zu 10 Sekunden. Die eingetragene Laserleistung, welche das Erhitzen und Verdunsten des Wassers aus der Schlickerschicht bewirkt, führt zum Kompaktieren der ursprünglich dispergierten Phase, bzw. des Keramikgrundmaterials. Im Ergebnis dessen wird sinterfrei ein Grünkörperabschnitts in der Schlickerschicht unmittelbar am Ort oder im Bereich des Scanmusters der Exposition ausgebildet. Vorteilhaft bewirkt die Verdunstungsenthalpie der flüssigen Phase eine Kühlung des Keramikgrundmaterials am exponierten Abschnitt der Schlickerschicht, sodass die generierte Temperatur zuverlässig unterhalb der Sintertemperatur des Keramikgrundmaterials bleibt, selbst wenn die insgesamt lokal in die Schlickerschicht eingetragene Energie auf den ersten Blick hoch erscheinen mag.

Der flächigen Ausdehnung der Schlickerschicht sind dabei generell keine Grenzen gesetzt. Typischerweise ist eine gleichmäßige Schichtdicke über die gesamte Flächenausdehnung der Schlickerschicht bevorzugt, da mittels eines virtuellen slice-Prozesses generierte Steuerdaten direkt zur CAD-basierten Fertigung additiv schichtweise generierter Bauteile verwendbar sind.

Typischerweise wird der Keramikschlicker mit einer Rakel in Form einer durchgängig gleichmäßig dicken Schlickerschicht auf einer kontinuierlich oder in vorgebbaren Schritten absenkbaren Unterlage ausgebracht. Ebenso kann der Schlicker auf der Unterlage / oder der zuvor ausgebrachten Schicht / lediglich abschnittsweise ausgebracht werden. Ebenso kann lediglich abschnittsweise ausgebrachter Schlicker, beispielsweise mit einer Rakel, zu einer geschlossenen Schicht geformt und dabei geglättet werden. Gemäß einer Weiterbildung kann eine nachfolgende Schlickerschicht ausschließlich auf einem zuvor im Schlicker bereits laserinduziert erzeugten Abschnitt des Grünkörpers aufgebracht werden.

Eine typische Dicke der erzeugten Schicht liegt im Bereich von 25 µm bis 2 mm, beispielsweise im Bereich von 50 µm bis 1000 µm, insbesondere im Bereich von 100 µm bis 750 µm, und kann z.B. 500 µm betragen. Eine Abweichung der eingestellten Schichtdicke liegt typischerweise unterhalb von 10 %, bevorzugt unterhalb von 5 % des Nominalwertes der Schichtdicke, typischerweise unterhalb von 10 µm.

Die Laserstrahlung kann mit einer geeigneten Scanneroptik, ebenso aber z.B. mit einer Quarzfaser, beispielsweise einer Multimode-Quarzfaser an den zu behandelnden Schichtabschnitt geführt werden. Eine Vorrichtung wie, beispielsweise, ein Laser-Plotter, bzw. der Aufsatz mit zugehöriger Kontroll- und Steuereinheit eines entsprechenden Plotters, kann an die Umsetzung des vorgeschlagenen Verfahrens angepasst werden. Vorteilhaft bietet die Führung der Laserenergie mittels Faseroptik bzw. Lichtwellenleiter eine besondere technologische Flexibilität. Ebenso kann eine von einer Laserlichtquelle abgegebene Strahlung mit einem System, umfassend Spiegel, Shutter, Modulatoren und/oder andere laseroptische Komponenten auf bzw. in die Schlickerschicht ausgerichtet und/oder geführt werden.

Gemäß einer oder mehrerer bevorzugter Ausführungsformen wird vorgeschlagen, das Schlickerbett, insbesondere die jeweils zuletzt aufgebrachte Schlickerschicht seriell mit einem und/oder parallel mit mehreren Laserlichtquellen zu bearbeiten. Ebenso kann die Energie eines Lasers geeignet gesplittet werden und an unterschiedlichen, jeweils vorbestimmten Abschnitten der Schicht in die flüssige Phase bzw. das Lösungsmittel des Keramikschlickers der Schlickerschicht eingekoppelt werden.

Vorteile ergeben sich mit einer Verkürzung der zur Strukturierung einer Schlickerschicht erforderlichen Prozesszeit.

Die Größe des jeweils applizierten Laserspots liegt im Bereich von 40 µm bis 10 mm, bevorzugt im Bereich von 50 µm bis 5 mm, beispielsweise im Bereich von 100 µm bis 3 mm. Dabei kann die insgesamt zum lokal begrenzten Verdunsten des Lösungsmittels erforderliche Laserenergie einmalig und kontinuierlich aber auch mehrmalig zeitlich versetzt bzw. wiederholt (diskontinuierlich) eingebracht werden.

Der Laserstrahl wird auf die Schlickerschicht beispielsweise punktuell oder als Line oder als Fläche gerichtet. Punkte und Linien sind beispielsweise technisch leicht mit Hilfe einer geeigneten Scan-Vorrichtung (Scanneroptik), die einen Laserpunkt über die Schicht gezielt verfahren kann, darstellbar. Ebenso ist zumindest ein Faserlaser einsetzbar. Bei der Bestrahlung der Schicht mit einem als Punkt oder Linie geführten Laserstrahl wird zunächst in einem sehr kleinen Flächenbereich das Lösungsmittel verdampft. Ist dieser Bereich ausgetrocknet, fließt Lösungsmittel aus dem noch flüssigen Schlicker durch Kapillarkräfte getrieben in die trocknen Bereiche nach. Somit baut sich laserinduziert radial um einen laserexponierten Punkt oder seitlich entlang einer laserbestrahlten Linie der Schlickerschicht in der Ebene der Schicht in zwei Dimensionen ein Grünkörper auf. In der Tiefe der Schlickerschicht, senkrecht zur Schichtebene, baut sich der Grünkörper laserinduziert ebenfalls auf.

Die Ausbildung des Grünkörperbereichs setzt sich vorteilhaft über die gesamte Schichtdicke fort und schließt, wenn bereits zuvor ein Grünkörperabschnitt unter dem aktuell austrocknenden Bereich ausgebildet war, an diesen an. Die Ausdehnung des gebildeten Grünkörpers kann auch über die Schichtdicke hinaus in die Tiefe des Schlickerbetts ausgedehnt werden, wenn dort noch kein Grünkörper vorlag und die lokale Erwärmung des Schlickerbetts mit dem Laserstrahl ausreichend lang aufrechterhalten wird.

Soll eine in der Schlickerebene liegende Fläche, beispielsweise ein Boden oder ein Oberflächenabschnitt des künftigen Bauteils erzeugt werden, so kann die Laserenergie in Abhängigkeit von der flächigen Ausdehnung und Kontur der betreffenden Fläche geführt werden. Beispielsweise für eine runde Fläche entlang einer Spiralbahn, die von der Kontur der Fläche umschlossen wird. Ebenso kann die Laserenergie in Form eines Linienrasters geführt werden. Beispielsweise kann der Laserstrahl entlang zueinander parallel ausgerichteter Linien, in Form von einander kreuzenden Linien, bzw. in Form eines Gitters, aber auch in Form eines Punktrasters oder eines beliebigen anderen Rasters geometrischer Gebilde mit oder ohne einander abschnittsweise überlappenden Abschnitten auf den betreffenden Abschnitt der Schicht geleitet werden.

Damit ist ein Pfad des Laserstrahls auf und/oder in der Schlickerschicht zumindest abschnittsweise ausgewählt unter einer Anordnung von einander sich kreuzenden Linien, einer Anordnung in Form eines Gitters, einer Anordnung in Form eines Punktrasters, oder einer Anordnung eines beliebigen anderen Rasters geometrischer Gebilde mit oder ohne einander überlappenden oder kreuzenden Abschnitten.

Hierbei kann der Laserstrahl fokussiert sein und der Fokus kann auf der Oberfläche der Schicht oder innerhalb der Schicht liegen, beispielsweise in einer Ebene der Schicht.

Der verwendete mindestens eine Laserstrahl kann gepulst oder kontinuierlich geführt werden. Beispielsweise kann ein auf oder in der Schicht liegender Fokus des Laserstrahls dabei abschnittsweise mit einer Geschwindigkeit im Bereich von 1 mm/sec bis zu einer Geschwindigkeit von 20 m/sec bewegt werden. Vorteile erwachsen aus der beschleunigten Strukturierung einer Schlickerschicht und der nahezu unmittelbar einsetzenden und nach dem Durchlauf des Laserstrahls sogar noch anschließend anhaltenden Ausbildung der Grünkörperstruktur. Die Verweilzeit des Laserstrahls auf bzw. in der Schicht kann während des Fertigungsprozesses dynamisch variieren. Vorteilhaft ist die Verweilzeit angepasst an eine zu erzielende vertikale und/oder laterale Ausdehnung eines Abschnitts des zu erzeugenden Grünkörpers. Soll beispielsweise eine Stärke einer laserinduziert ausgebildeten Wandung abschnittsweise stetig zunehmen, so wird die Verweilzeit des Laserstrahls entlang des Expositionspfades abschnittsweise erhöht oder ein und derselbe Abschnitt der Schicht wird wiederholt laserexponiert.

Dem zu Grunde liegenden Prinzip der laserinduzierten Annäherung benachbarter Schlickerpartikel und der damit einsetzenden Verfestigung von Abschnitten einer oder mehrerer Schlickerschichten zu Abschnitten des Grünkörpers ist zu eigen, dass im Unterschied zu bekannten laserbasierten Verfahren nicht der gesamte flächige Querschnitt einer Struktur geschrieben wird. Auch wird im Unterschied zu anderen lasergestützten Verfahren nicht die äußere Kontur der auszubildenden Festkörperschicht mit dem Laser geschrieben, sondern lediglich eine oder mehrere innere Linien, beispielsweise eine zentrale Linie einer Querschnittsfläche der zu erzeugenden Struktur.

Beispielsweise wird zum Erzeugen eines Grünkörpers in Form eines senkrecht im Schlickerbett stehenden Rohres einer vorgegebenen Wandstärke je Schicht nicht die Stirnfläche des Rohres, sondern lediglich ein Kreis geschrieben.

Dabei kann die mit dem Laser geschriebene Linie geschlossen bzw. durchgehend sein, ebenso aber auch gepunktet, gestrichelt, oder z.B. "gepunktet-gestrichelt" sein. Soll das Rohr eine größere Wandstärke, beispielsweise im Bereich um 1 cm haben, so ist mit einem Laserspot eines Durchmessers von 50 µm unter Berücksichtigung der Energiedichte des Laserstrahls auch die Strukturierung der Schicht mit Hilfe von zwei oder mehr konzentrisch geführten kreisförmigen Bahnen des Laserstrahls möglich.

Nach dem vollständig abgeschlossenen Aufbauprozess liegt das Bauteil als ein feuchter und von Schlicker umgebener Grünkörper vor. Der Rest des die verfestigten Abschnitte umgebenden Schlickers ist wie der ursprünglich eingesetzte Schlicker flüssig oder gelartig und kann, ähnlich wie bei Verfahren der Stereolithographie, durch Ausgießen oder Absaugen von dem laserinduziert ausgebildeten Bauteil getrennt werden. Vorteilhaft kann dieser Schlicker dem Fertigungsverfahren eines neuen Grünkörpers erneut zugeführt werden.

Um ein gesintertes Bauteil zu erzeugen wird der dem Schlickerbett entnommene Grünkörper getrocknet und gebrannt. Das Trocknen kann vorteilhaft durch aktive Konvektion so gesteuert werden, dass der beim Trocknen auftretende Trockenschwund nicht zur Beschädigung des Grünkörpers führt.

Auf Grund der Verwendung industrieüblicher, nur geringe Anteile (gleich oder weniger als 3 Vol% ) Organik aufweisender Schlicker, ist der Gefügezustand des laserinduziert additiv aufgebauten Grünkörpers dem eines konventionell hergestellten Grünkörpers vergleichbar oder gleicht diesem. Auch weist der Schlicker nur geringe Anteile anorganischer Hilfsstoffe auf, die vor dem Brennen nicht in einem gesonderten Entbinderungsprozess entfernt werden müssten. Aus diesem Grund kann der Prozessschritt des Brennens, bzw. der Brand, bei Bedingungen (Temperatur, Zeit) erfolgen, die vergleichbar oder identisch mit den industrieüblichen sind. Die Vorteile sind offenkundig: verminderte Herstellungskosten durch Verwendung wesentlich kostengünstigerer keramischer Schlicker, verminderte Energiekosten durch Verzicht auf Entbinderungs-Schritt, verkürzter Fertigungsaufwand durch kürzere Prozesszeit, direkte Kopplung des Rapid-Prototyping an die industrielle Fertigung, Problemlose Skalierbarkeit des Prozesses.

Vorteile des vorgeschlagenen Verfahrens ergeben sich vor dem Hintergrund des wachsenden Bedarfs an Prototypen für die Fertigungsindustrie und der steigender Komplexität der erforderlichen Prototypen, aber auch dem Bedarf an einer flexibel auf aktuelle Erfordernisse reagierenden Fertigung auch großer Losgrößen. Unter dem Leitbegriff "Rapid Prototyping", "Rapid Manufacturing" oder "Additive Fertigung" sind eine Vielzahl neuartiger Technologien entstanden, mit deren Hilfe sich der Anspruch an eine flexiblere Fertigung realisieren lässt. Die wesentlichen Merkmale dieser Verfahren sind die Erstellung von Prozesssteuerdaten aus CAD-Geometriedaten mit anschließender Steuerung von Bearbeitungseinrichtungen. Allen diesen Verfahren sind folgende Merkmale gemein [8 - 10]:
1) Die Formgebung geschieht nicht durch Materialabtrag, sondern durch Zugabe von Material, oder durch den Phasenübergang eines Materials von flüssig nach fest. Auch kann eine Kompaktierung eines pulverförmigen Ausgangsmaterials erfolgen.
2) Fast alle Verfahren bauen Teilgeometrien aus Schichten endlicher Dicke direkt aus CAD-Daten auf, wobei die Schichten virtuell durch einen Slice-Prozeß realisiert werden. Die heute zur Verfügung stehenden Verfahren unterscheiden sich im Ausgangszustand der Materialien (fest, flüssig, gasförmig) bei der Schichtenaddition bzw. dem Bauprozess.

Während in den 80er und 90er Jahren des vorangegangenen Jahrhunderts eine Vielzahl unterschiedlicher Verfahren zur additiven Fertigung entwickelt wurden und Flexibilität im Design prototypischer Bauteile im Vordergrund stand, steht nun die Fertigung von Bauteilen mit optimierten Eigenschaften im Fokus laufender Forschungsaktivitäten. Entsprechend dieser Entwicklung hat sich die Terminologie für diese Technologien von ursprünglich "Rapid Prototyping" zu heute "Additive Fertigung" oder "Additive Manufacturing" gewandelt.

Zu den verbreitetsten Verfahren zählen:
Das Selective Laser Sintering (SLS) wurde ursprünglich für Pulver aus Nylon, Polycarbonat und Wachsen entwickelt und später auf Metall und Keramikpulver übertragen. In einem Reaktor werden Pulverschichten lokal versintert oder verschmolzen, wobei die Schmelztemperatur durch Einsatz von Lasern erreicht wird [11 - 13].

Bei der Multiphase Jet Solidification (MJS) werden Metallpulver-Bindergemische ähnlich dem Spritzgußverfahren durch computerkontrollierte verfahrbare Düsen zu Schichten verarbeitet, die dann wiederum das Bauteil aufbauen [14].

Die Stereolithographie verwendet flüssige UV-sensitive Polymere als Ausgangsmaterialien, die in einer Schicht lokal durch Lasereinstrahlung aushärten [15 - 18].

Ebenfalls flüssige Polymere als Ausgangsmaterial werden beim Solid Ground Curing (SGC) verwendet [14]. Dünne Polymerschichten härten nach Belichten mit UV-Strahlung an den exponierten Stellen aus, das Bauteil wird schichtweise aufgebaut.

Simultaneous shot peening (SSP) wird ein Verfahren genannt, bei dem die Oberfläche einer geeigneten Form durch Besprühen mit flüssigem Metall abgebildet wird [14]. Diese Abbildung kann beispielsweise als Teil eines Spritzgusswerkzeuges oder einer Pressform dienen.

Dem Multiphase Jet Solidification (MJS) -Prozeß sehr ähnlich ist das Fused Deposition Modelling (FDM) [19]. Eine Düse wird NC-gesteuert über das höhenverstellbare aufzubauende Werkstück gefahren. Durch schichtenweises Abscheiden von geschmolzenem Material und entsprechendes Absenken der Plattform wird das Bauteil aufgebaut [14].

Laminated Object Manufacturing (LOM) wurde ursprünglich für die Herstellung von Komponenten aus Papier oder Kunststoff entwickelt. Ein Laser schneidet aus einzelnen Lagen die entsprechenden Bauteilschichten, die unter Verwendung von Klebern zum Werkstück zusammenlaminiert werden [20]. Am Beispiel von Al₂O₃ wird das LOM-Verfahren in [21] beschrieben, wobei mit Hilfe eines Lasers keramische Folien zugeschnitten werden, die ihrerseits nach dem Doctor-Blade-Verfahren hergestellt wurden.

Das Verfahren der Lagenweisen Schlickerdepositions (LSD) bringt keramische Grünschichten über ein an das Foliengießen angelehntes Verfahren auf und verwendet gleich dem Selective Laser Sintering (SLS) einen Laser zur lokalen Verfestigung/Versinterung der keramischen Grünschichten [1 - 3].

Der indirekte 3D Druck verwendet metallische oder keramische Pulver oder Polymerpulver zum Auftragen von Schichten, die dann durch lokales Einspritzen eines Binders verfestigt werden. Zum Einspritzen des Binders kommen Technologien vergleichbar jenen des Tintenstrahldrucks zum Einsatz [22].

Der direkte 3D Druck verwendet mit Partikeln beladene Suspensionen, die mittels Druckkopftechnologien, vergleichbar einem Tintenstrahldrucker, lokal lagenweise auf ein Substrat aufgespritzt werden und durch die Verdampfung des Lösungsmittels zu festen Pulverstrukturen (Grünkörpern) führen. Dieses Verfahren führt zu relativ hohen Dichten in den Pulverstrukturen (hohe Gründichte), ist jedoch nicht für die kostengünstige Darstellung größerer Körper geeignet [23].

Keines der bisher bekannten Rapid Prototyping Verfahren eignet sich zur Generierung von Grünkörpern, die vergleichbar sind mit einem konventionell hergestellten Grünkörper. Die Generierung voluminöser Grünkörper ist mit bekannten RP-Verfahren besonders schwierig oder gänzlich unmöglich. Grünkörper mit Eigenschaften, die von einem konventionell hergestellten Grünkörper abweichen, erlauben in der Regel nicht oder nur mit großem technologischen Aufwand die Darstellung von keramischen Bauteilen, deren Eigenschaften vergleichbar zu jenen von konventionell hergestellten keramischen Bauteilen sind. Als Beispiel sei ein keramischer Grünkörper, hergestellt mittels Stereolithographie genannt. Dieser Grünkörper ist angesichts von bis zu 60 Vol% Organik besser als keramikgefülltes Polymer beschrieben. Bevor der eigentliche Sintervorgang der Keramik beginnen kann, muss die Organik in einem technologisch aufwendigen und kostenintensiven Entbinderungsprozess ausgetrieben werden. Das Entbindern kann je nach Bauteilgeometrie mehrere Tage dauern und zu Defekten im Grünkörper führen, die durch das anschließende Sintern im Allgemeinen nicht mehr beseitigt werden können.

Das 3D Drucken führt wegen der geringen Schüttdichte keramischer Pulver zu Grünkörpern geringer Dichte aus denen sich mittels Sintern in der Regel keine dichten Keramiken generieren lassen [22]. Bei der Verwendung feinster keramischer Pulver, die z.B. zur Steigerung der Sinteraktivität oder zur Ausbildung eines besonders feinkristallinen Gefüges des keramischen Bauteils eingesetzt werden, verstärken sich diese negativen Merkmale in aller Regel sogar noch.

Im LSD Verfahren werden mittels Schlickerdeposition Grünschichten mit einer Dichte vergleichbar einem konventionellen Grünkörper generiert. Bei dem beschriebenen Verfahren wird ein Laser eingesetzt, um die Schichtinformation in die getrockneten Grünschichten zu schreiben, jedoch führt das Lasersintern zu stark anisotropen Eigenschaften des Prototypen und unter Umständen zu weiteren unerwünschten Nebeneffekten auf Grund einer lokal überhöhten Temperatur, beispielsweise zu einer Blasenbildung oder der unerwünschten Ausbildung glasiger Phasen, etc.[3]. Die Laserbestrahlung beim LSD-Verfahren führt zwar zu einer lokalen Versinterung der Grünschicht, so dass sich bestrahlte Bereiche aus dem Grünkörper später mittels Wasser herauslösen lassen, jedoch weisen die laserbestrahlten Bereiche Eigenschaften auf, die von denen konventionell gesinterter Keramiken verschieden sind. Auch ein anschließendes konventionelles Sintern kann die Eigenschaften eines durch LSD aufgebauten Bauteils nicht derart beeinflussen, dass ein Bauteil entsteht, dessen Eigenschaften vergleichbar mit einem konventionell gesinterten Bauteil sind.

Vor diesem Hintergrund erlaubt das vorgeschlagene Verfahren Grünkörper zu generieren, die Eigenschaften haben, die vergleichbar sind mit jenen eines konventionell hergestellten Grünkörpers. Grünkörper mit Eigenschaften abweichend einem konventionell hergestellten Grünkörper erlauben in der Regel nicht oder nur mit großem technologischen Aufwand die Darstellung von keramischen Bauteilen, mit Eigenschaften vergleichbar einem konventionell hergestellten keramischen Bauteil. Als Beispiel sei ein keramischer Grünkörper, hergestellt mittels Stereolithographie genannt. Die Stereolithographie verwendet flüssige UV-sensitive Polymere als Ausgangsmaterialien, die in einer Schicht lokal durch Lichteinstrahlung aushärten. Zum Aufbau keramischer Grünkörper werden die UVsensitiven Polymere mit einem keramischen Pulver beladen. Durch Aushärtung des Polymers entsteht ein Grünkörper, der 40 bis 60 vol.% Organik enthält. Die Organik muss in aufwendigen Entbinderungsprozessen ausgetrieben werden, bevor der eigentliche Sintervorgang der Keramik beginnen kann. Das Entbindern kann je nach Bauteilgeometrie mehrere Tage dauern und zu Defekten im Grünkörper führen, die durch anschließendes Sintern im Allgemeinen nicht beseitigt werden können. Der Aufbau von voluminösen Bauteilen ist kaum möglich, da das Austreiben der Organik nur bis zu einer bestimmten Dicke der Bauteile technisch möglich ist, ohne das Bauteil zu schädigen.

Im Gegensatz dazu, verwendet das vorgeschlagene Verfahren Keramikschlickern, die keine organischen oder anorganischen Additive enthalten, welche thermisch oder optisch vernetzt oder geliert werden, um damit den ausgebildeten Grünkörper zu stabilisieren. Bevorzugt weist der verfahrensgemäß hergestellte Grünkörper ein Porenvolumen geringer als 45 Volumen-% , insbesondere geringer als 40 Volumen-%, beispielsweise ein Porenvolumen von höchstens 38 Volumen-% auf.

Kennzeichnend für das vorgeschlagene Verfahren ist der schichtweise Aufbau eines Grünkörpers mittels schichtweisem Auftrag eines flüssigen keramischen Schlickers und lokalem Verdampfen des Lösungsmittels des Schlickers aus einer aufgetragenen Schlickerschicht, z.B. durch lokales Verdampfen des Wasser bei wasserbasierten Schlickern, unter der Einwirkung eines Laserstrahls. Darüber hinaus wird verfahrensgemäß nicht die gesamte Fläche der zweidimensionalen Projektion des Bauteils auf bzw. in der entsprechenden Schicht mittels Laser bestrahlt, sondern lediglich ein Bruchteil dieser Fläche. Um den mittels Laser bestrahlten Bereich bildet sich ein Grünkörper aus, da in dem bestrahlten Bereich das Lösungsmittel verdampft und, ähnlich dem konventionellen Schlickerguss, Lösungsmittel aus dem Schlicker durch Kapillarkräfte in den bestrahlten Bereich gesaugt wird. Dadurch muss z.B. nur ein innerhalb der 2D Kontur der Projektion des gewünschten Bauteils in der entsprechenden Schicht liegender Bereich der Schlickerschicht mittels Laser, beispielsweise in Form einer oder mehrerer Linien, bestrahlt werden. Der mit dem Bestrahlen oder im Ergebnis des Bestrahlens ausgebildete Grünkörper erstreckt sich seitlich von diesen Linien und in die Tiefe der Schlickerschicht über diejenigen Bereiche der Schlickerschicht und/oder des Schlickerbetts, denen flüssige Phase entzogen wurde, oder wo Partikel des Keramikgrundmaterials laserinduziert irreversibel aggregiert wurden. Kennzeichnend ist weiterhin, dass dieses Aggregieren kein Partikelwachstum im Sinne eines Sinterns umfasst. Unter der Einwirkung des Laserstrahls werden somit keine Sinterhälse ausgebildet und ein mittlerer Korndurchmesser des keramischen Grundmaterials bleibt unverändert. Mit dem Fortschreiten des Laserstrahls wächst dieser Grünkörper allmählich - zunächst hauptsächlich in der Ebene der Schlickerschicht - und wird mit dem Auftragen weiterer Schlickerschichten und deren gezielt abschnittsweiser Bestrahlung mit dem Laserstrahl aufgebaut.

Vorteilhaft ist das Stapeln von Schichten eines keramischen Schlickers, ohne dabei vor dem Strukturierungsschritt jede Schlickerschicht vollständig trocknen zu müssen, extrem zeitsparend. Die Strukturierung einer Schicht erfolgt durch direkte Bestrahlung der nassen Schlickerschicht mittels einer oder mehrerer Laserlichtquellen.

Für das vorgeschlagene additive Verfahren können industrielle, wasserbasierte Schlicker mit einem geringen Anteil an organischen oder anorganischen Additiven eingesetzt werden, was umweltschonend und kostengünstig ist.

Der aufgebaute Grünkörper enthält dementsprechend nur geringe Mengen oder keine Organik, was das Sintern wie dargelegt wesentlich erleichtert.

Um ein Bauteil im Grünkörperzustand zu generieren, darf das Volumen des Bauteils typischerweise keiner Wärmebehandlung ausgesetzt werden oder mit hohen Konzentrationen an organischem Material beladen werden.

Keramische Massen, die nur geringe Anteile an organischen Additiven aufweisen, insbesondere Anteile unterhalb von 3 Volumen-%, kommen auch auf Grund der hieraus resultierenden geringeren Kosten bevorzugt in der industriellen Massenproduktion keramischer Bauteile zum Einsatz.

Aspekte des vorgeschlagenen Verfahrens betreffen somit:
1. ein additives Fertigungsverfahren mittels laserinduziertem Trocknen eines Schlickers in keramischen Schlickerschichten zur Darstellung eines Grünkörpers mit einer Dichte höher als 55 vol.% theoretischer Dichte, wobei die Schicht nur punktuell oder als Linie mit einem Laser erwärmt und das Lösungsmittel verdampft wird und sich radial um den erwärmten Punkt oder seitlich zu der erwärmten Linie ein Grünkörper durch kapillar getriebenen Entzug des Lösungsmittels, z.B. Wasser bei wasserbasierten Schlickern, vergleichbar dem Schlickergussverfahren, bildet.
2. ein generatives Verfahren zur Darstellung eines keramischen Grünkörpers nach Aspekt 1 gekennzeichnet dadurch, dass die generierten Grünkörper bezüglich Dichte und Festigkeit vergleichbar zu keramischen Grünkörpern hergestellt im Schlickerguss oder Schlickerdruckgussverfahren sind.
3. ein generatives Verfahren zur Darstellung eines keramischen Grünkörpers nach Aspekt 1 gekennzeichnet dadurch, dass der generierte Grünkörper nur einen geringen Anteil an organischen Additiven, insbesondere einen Anteil unter 5 Gewichts-% enthält.
4. ein generatives Verfahren zur Darstellung eines keramischen Grünkörper nach Aspekt 1 gekennzeichnet dadurch, dass der generierte Grünkörper keine organischen Additive enthält.
5. ein generatives Verfahren zur Darstellung eines keramischen Grünkörpers gemäß den Aspekten 1-4 gekennzeichnet dadurch, dass als Laserstrahlquelle ein Laser verwendet wird, der bei einer Wellenlänge strahlt, die besonders gut von dem Lösungsmittel des Schlickers absorbiert wird, bei Wasser z.B. 1970 nm.

### Literatur:

[1] T. Krause, S. Engler, J. Günster, J. G. Heinrich, "Process and a Device for Producing Ceramic Molds," US 6,827,988, B2 (2004).
[2] J. Günster, S. Engler, J. G. Heinrich, "Forming of complex shaped ceramic products via layer-wise slurry deposition (LSD)," Bull. Eur. Ceram. Soc., 1 25-28 (2003).
[3] X. Tian, J. Günster, J. Melcher, D. Li, J. G. Heinrich, "Process parameters analysis of direct laser sintering and post treatment of porcelain components using Taguchi's method," J. Eur. Ceram. Soc., 29 1903-15 (2009).
[4] W. Löschau, R. Lenk, S. Scharek, M. Teichgräber, S. Nowotny, C. Richter, "Prototyping of Complex - Shaped Parts and Tools of Si/SiC Ceramics by Selective Laser Sintering," Ceramics: Getting into the 2000's, 9th Cimtech-World Ceramics Congress, Florence, vol. B, 567-573 (1998).
[5] Q. Lonne, N. Glandut, P. Lefort, "Surface densification of porous ZrB2-39 mol.% SiC ceramic composites by a laser process," J. Eur. Ceram. Soc., 32 955-963 (2012).
[6] Ph. Bertrand, F. Bayle, C. Combe, P. Goeuriot, I. Smurov, "Ceramic components manufacturing by selective laser sintering," Appl. Surf. Sci., 254 898-992 (2007).
[7] A. Zocca, P. Colombo, J. Günster, T. Mühler, J. G. Heinrich, "Selective laser densification of lithium aluminosilicate glass ceramic tapes," Appl. Surf. Sci. 265 610-614 (2013).
[8] ASTM F2792-10 Standard Terminology for Additive Manufacturing Technologies, ASTM, USA, (2012).
[9] Jensen, K.: State-of-the Art of Different Available and Coming RP-Systems. Proceedings of "2nd Scandinavian Rapid Prototyping Conference, Exhibition and Course", Aarhus, 1993.
[10] Sheng, X., Tucholke,U.: On Triangulating Surface Models for SLA. Proceedings of the 2nd International Conference on Rapid Prototyping, Dayton, Ohio, 23.-26.6.1991.
[11] Lakshminarayan, U., Zong, G., Richards, W., Marcus, H.: Solid Free Form Fabrication of Ceramics. Proceedings of the Symposium on Synthesis and Processing of Ceramics, Fall Meeting of the Material Research Society, Boston, Mass., Dez. 2-6, 1991.
[12] J. C. Nelson, S. Xue, J. W. Barlow, J. J. Beaman, H. L. Marcus, D. L. Bourell, "Model of the selective laser sintering of Bisphenol-A polycarbonate," Ind. Eng. Chem. Res. 32 2305-2317 (1993).
[13] W. Cooke, R. A. Tomlinson, R. Burguete, D. Johns, G. Vanard, "Anisotropy, homogeneity and ageing in an SLS polymer," Rapid Prototyping Journal, 17 269 - 279 (2011).
[14] Pickering, Simon: Rapid Prototyping turns to PM for new Solutions. Met. Powd. Rep. 50 [3] (1995), 30-33.
[15] Pacheco, J.M.: Rapid Prototyping, MTIAC Report TA-91-01, Jan. 1991. Haase, B.: Stereolittography at Chrysler Motors, Microcad News, [8] 1990.
[16] Machlis, S.: Cubital Claims Advantages Over Stereolitography, Design News, 30 (1990).
[17] F.P. Jacobs, "Rapid prototyping and manufacturing fundamentals of stereolithography," Dearborn, SME (1992).
[18] M. L. Griffith, J. W. Halloran, "Freeform fabrication of ceramics via stereolithography," J. Am. Ceram. Soc. 79, 2601-608 (1996).
[19] M. A. Yardimci, S. Guceri, "Conceptual framework for the thermal process modeling of fused deposition," Rapid Prototyping Journal, 2 26-30 (1996).
[20] Feygin, M., Hsieh, B., Melkanoff, M.: Laminated Object Manufacturing (LOM): A New Tool in the CIM World. Proceedings of PROLAMAT 1992, Tokyo, Japan, June 1992.
[21] Griffin, C., Danfenbach, J.D., McMillin, S.: Desktop Manufacturing: LOM vs Pressing. Am Ceram. Soc. Bull. 73 (1994), 109-113
[22] Reinhold Melcher "Rapid Prototyping von Keramiken durch 3D-Drucken," Dissertation Erlangen 2009.
[23] J. Ebert, E. Ozkol, A. Zeichner, K. Uibel, O. Weiss, U. Koops, R. Telle, H. Fischer "Direct inkjet printing of dental prostheses made of zirconia," J. Dent. Res. 88 [7] 673-676 (2009).

Die vorliegende Erfindung wurde anhand von Ausführungsbeispielen erläutert. Diese Ausführungsbeispiele sollten keinesfalls als einschränkend für die vorliegende Erfindung verstanden werden.

## Patentansprüche

1. Verfahren zur additiven Fertigung eines keramischen Grünkörpers, umfassend:
- Bereitstellen eines Schlickers, umfassend in einer flüssigen Phase suspendierte Partikel eines Keramikgrundmaterials, wobei der Schlicker keine organischen oder anorganischen Additive enthält, welche thermisch oder optisch vernetzt oder geliert werden,
- Erzeugen einer Schlickerschicht,
- Ausrichten einer Strahlung einer Laserlichtquelle auf einen Abschnitt der Schlickerschicht,
- dabei Verdampfen von flüssiger Phase aus der Schlickerschicht in dem Abschnitt der Schlickerschicht, auf welchen die Strahlung der Laserlichtquelle ausgerichtet ist oder war;
- sinterfreies Ausbilden eines Abschnitts des keramischen Grünkörpers in der Schlickerschicht;
- Optionales Wiederholen der Schritte Erzeugen, Ausrichten, Verdampfen und sinterfreies Ausbilden bis der keramische Grünkörper vorliegt;
- Trennen des keramischen Grünkörpers vom Schlicker.

2. Verfahren nach Anspruch 1, weiter umfassend:
- Trocknen des keramischen Grünkörpers.

3. Verfahren nach Anspruch 1 oder 2, wobei als Schlicker ein Anteil des Keramikgrundmaterials im Schlicker einen Anteil von zumindest 60 Volumen-%, bevorzugt von bis zu 65 Volumen-%, insbesondere von bis zu 70 Volumen-% oder bis zu 74 Volumen-% umfasst.

4. Verfahren nach einem der vorstehenden Ansprüche, wobei eine Dicke der erzeugten Schlickerschicht ausgewählt ist unter einer Dicke im Bereich von 25 µm bis 2 mm, 50 µm bis 1000 µm, 100 µm bis 750 µm, oder einen Wert aufweist, der zwischen 300 µm bis 600 µm, beispielsweise bei 500 µm liegt.

5. Verfahren nach einem der vorstehenden Ansprüche, wobei die Laserlichtquelle eingerichtet ist, eine Strahlung in einem Wellenlängenbereich von 520 nm bis 10 µm abzugeben.

6. Verfahren nach Anspruch 5, wobei die Laserlichtquelle eingerichtet ist, eine Strahlung zumindest einer Wellenlänge im Wellenlängenbereich von 600 nm bis 3 µm abzugeben und/oder die Laserlichtquelle so eingerichtet ist, dass von einer auf der Schlickerschicht auftreffenden Laserleistung ein Anteil von zumindest mehr als 1% direkt an die flüssige Phase ankoppelt.

7. Verfahren nach Anspruch 6, wobei die Laserlichtquelle eingerichtet ist, eine Strahlung zumindest einer Wellenlänge im Wellenlängenbereich von 1970 nm ± 100 nm abzugeben.

8. Verfahren nach einem der vorstehenden Ansprüche, wobei das Ausrichten ein Fokussieren von Laserstrahlung auf oder in die Schlickerschicht umfasst und/oder ein ausgerichteter und/oder fokussierter Laserstrahl entlang eines Expositionspfades geführt wird, der auf oder in der Schlickerschicht verläuft.

9. Verfahren nach Anspruch 8, wobei der Expositionspfad zumindest abschnittsweise durch eine geschlossene und/oder eine unterbrochene Linie darstellbar ist und / oder der Expositionspfad zumindest abschnittsweise als Raster, als Gitter, als Spirale, als Ellipse, als Kreis, als Linienschar und/oder als Muster darstellbar ist.

10. Verfahren nach einem der vorstehenden Ansprüche, wobei eine Größe einer ausgerichteten und/oder fokussierten Laserstrahlung auf der Oberfläche der Schlickerschicht zumindest in einer Richtung im Bereich von 25 µm bis 25 mm, insbesondere im Bereich von 40 µm bis 10 mm, bevorzugt im Bereich von 50 µm bis 5 mm, weiter bevorzugt im Bereich von 100 µm bis 3 mm liegt.

11. Verfahren nach einem der vorhergehenden Ansprüche, wobei dem Verdampfen ein kapillarkraftgetriebenes Nachströmen der flüssigen Phase in das Partikelaggregat und/oder in den Abschnitt der Schlickerschicht, auf den die Strahlung der Laserlichtquelle ausgerichtet ist oder war, folgt.

12. Verfahren nach zumindest einem der Ansprüche 8 oder 9, wobei der Expositionspfad aus Daten eines virtuellen Slice-Prozesses abgeleitet ist.

13. Verfahren nach einem Ansprüche 8, 9 oder 12, wobei eine Projektionsfläche des Expositionspfades zum sinterfreien Ausbilden eines Abschnitts des Grünkörpers in der Schlickerschicht auf der Schlickerschicht oder in einer Ebene der Schlickerschicht maximal halb so groß, bevorzugt maximal ein Drittel so groß ist, wie eine Fläche eines Querschnitts des ausgebildeten Abschnitts des Grünkörpers auf der Schlickerschicht oder in der Ebene der Schlickerschicht.

14. Verfahren nach einem der vorstehenden Ansprüche, wobei eine Dichte, des mit dem Verfahren erhältlichen Grünkörpers zumindest 55 % derjenigen Dichte erreicht, die ein porenfreier Festkörper, umfassend das keramische Grundmaterial aufweist.

## Claims

1. Process for the additive manufacture of a green ceramic body, comprising:
- provision of a slip comprising, suspended in a liquid phase, particles of a structure-forming ceramic material, where the slip comprises no organic or inorganic additives which are gelled or crosslinked by thermal or optical methods;
- production of a slip layer;
- direction of radiation from a laser light source onto a slip-layer section;
- resultant vaporization of liquid phase from the slip layer in the slip-layer section onto which the radiation from the laser light source is or has been oriented;
- sinter-free formation of a section of the green ceramic body in the slip layer;
- optional repetition of the steps of production, direction, vaporization and sinter-free formation until the green ceramic body is obtained;
- separation of the green ceramic body from the slip.

2. Process according to Claim 1, moreover comprising:
- drying of the green ceramic body.

3. Process according to Claim 1 or 2, where, as slip, the proportion of the structure-forming ceramic material in the slip is at least 60% by volume, preferably up to 65% by volume, in particular up to 70% by volume or up to 74% by volume.

4. Process according to any of the preceding claims, where the thickness of the resultant slip layer is selected from a thickness in the range from 25 µm to 2 mm, from 50 µm to 1000 µm, or from 100 µm to 750 µm; or assumes a value from 300 µm to 600 µm, for example 500 µm.

5. Process according to any of the preceding claims, where the configuration of the laser light source is such that it emits radiation in the wavelength range from 520 nm to 10 µm.

6. Process according to Claim 5, where the configuration of the laser light source is such that it emits radiation at least of a wavelength in the wavelength range from 600 nm to 3 µm and/or the configuration of the laser light source is such that a proportion of at least more than 1% of the laser power incident on the slip layer is input directly into the liquid phase.

7. Process according to Claim 6, where the configuration of the laser light source is such that it emits radiation at least of a wavelength in the wavelength range of 1970 nm ± 100 nm.

8. Process according to any of the preceding claims, where the direction procedure comprises focusing of laser radiation onto or into the slip layer and/or a directed and/or focused laser beam is guided along an exposure trace which proceeds on or in the slip layer.

9. Process according to Claim 8, where the exposure trace can be represented at least in sections by a continuous and/or interrupted line and/or the exposure trace can be represented at least in sections as lattice, as grid, as spiral, as ellipse, as circle, as group of lines and/or as pattern.

10. Process according to any of the preceding claims, where a dimension of oriented and/or focused laser radiation on the surface of the slip layer at least in one direction is in the range from 25 µm to 25 mm, in particular in the range from 40 µm to 10 mm, preferably in the range from 50 µm to 5 mm, more preferably in the range from 100 µm to 3 mm.

11. Process according to any of the preceding claims, where the vaporization is followed by capillary-force-driven flow of the liquid phase into the particle aggregate and/or into the slip-layer section onto which the radiation from the laser light source is or has been directed.

12. Process according to at least one of Claims 8 and 9, where the exposure trace has been derived from data from a virtual slice method.

13. Process according to any of Claims 8, 9 and 12, where the projection area of the exposure trace for the sinter-free formation of a green-body section in the slip layer on the slip layer or in a plane of the slip layer is at most half as large, preferably at most one third as large, as the area of the cross section of the resultant green-body section on the slip layer or in the plane of the slip layer.

14. Process according to any of the preceding claims, where the density of the green body obtainable by the process reaches at least 55% of the density of a pore-free solid body comprising the structure-forming ceramic material.

## Revendications

1. Procédé de fabrication additive d'un corps vert en céramique, ledit procédé comprenant les étapes suivantes :
- fournir une barbotine comprenant des particules d'un matériau de base céramique en suspension dans une phase liquide, la barbotine ne contenant aucun additif organique ou minéral sui est réticulé ou gélifié par voie thermique ou optique ;
- générer une couche de barbotine ;
- orienter un rayonnement d'une source de lumière laser sur une portion de la couche de barbotine ;
- évaporer ainsi la phase liquide de la couche de barbotine dans la portion de la couche de barbotine vers laquelle le rayonnement de la source de lumière laser est ou était orienté ;
- former sans frittage une portion du corps vert en céramique dans la couche de barbotine ;
- répéter éventuellement les étapes de génération, d'orientation, d'évaporation et de formation sans frittage jusqu'à ce que le corps vert en céramique soit présent ;
- séparer le corps vert en céramique de la barbotine.

2. Procédé selon la revendication 1, comprenant en outre l'étape suivante :
- sécher le corps vert en céramique.

3. Procédé selon la revendication 1 ou 2, en tant que barbotine, une proportion de matériau de base céramique dans la barbotine comprend une proportion d'au moins 60 % en volume, de préférence jusqu'à 65 % en volume, en particulier jusqu'à 70 % en volume ou jusqu'à 74 % en volume.

4. Procédé selon l'une des revendications précédentes, une épaisseur de la couche de barbotine générée est choisie parmi une épaisseur dans la gamme allant de 25 µm à 2 mm, 50 µm à 1000 µm, 100 µm à 750 µm ; ou a une valeur comprise entre 300 µm et 600 µm, par exemple est de 500 µm.

5. Procédé selon l'une des revendications précédentes, la source de lumière laser étant conçue pour émettre un rayonnement dans une gamme de longueurs d'onde allant de 520 nm à 10 µm.

6. Procédé selon la revendication 5, la source de lumière laser étant conçue pour émettre un rayonnement d'au moins une longueur d'onde dans la gamme de longueurs d'onde allant de 600 nm à 3 µm et/ou la source de lumière laser étant conçue de telle sorte qu'une proportion de plus de 1 % au moins de la puissance laser incidente à la couche de barbotine est couplée directement à la phase liquide.

7. Procédé selon la revendication 6, la source de lumière laser étant conçue pour émettre un rayonnement d'au moins une longueur d'onde dans la gamme de longueurs d'onde allant de 1970 nm ± 100 nm.

8. Procédé selon l'une des revendications précédentes, l'orientation comprenant la focalisation d'un rayonnement laser sur ou dans la couche de barbotine et/ou un faisceau laser orienté et/ou focalisé étant guidé le long d'un trajet d'exposition qui s'étend sur ou dans la couche de barbotine.

9. Procédé selon la revendication 8, le trajet d'exposition pouvant être représenté au moins par portions par une ligne fermée et/ou discontinue et/ou le trajet d'exposition pouvant être représenté au moins par portions sous forme d'une trame, d'une grille, d'une spirale, d'une ellipse, d'un cercle, d'un ensemble de lignes et/ou d'un motif.

10. Procédé selon l'une des revendications précédentes, une dimension d'un rayonnement laser orienté et/ou focalisé sur la surface de la couche de barbotine au moins dans une direction étant dans la gamme allant de 25 µm à 25 mm, en particulier dans la gamme allant de 40 µm à 10 mm, de préférence dans la gamme allant de 50 µm à 5 mm, plus préférablement dans la gamme allant de 100 µm à 3 mm.

11. Procédé selon l'une des revendications précédentes, l'évaporation étant suivie d'un écoulement par capillarité de la phase liquide dans l'agrégat de particules et/ou dans la portion de la couche de barbotine vers laquelle le rayonnement de la source de lumière laser est ou était orienté.

12. Procédé selon l'une au moins des revendications 8 ou 9, le trajet d'exposition étant dérivé de données d'un processus de tranche virtuelle.

13. Procédé selon l'une des revendications 8, 9 ou 12, une surface de projection du trajet d'exposition étant au maximum deux fois moins grande, de préférence au maximum trois fois moins grande, qu'une surface d'une section transversale de la portion formée du corps vert sur la couche de barbotine ou dans le plan de la couche de barbotine afin de former sans frittage une portion du corps vert dans la couche de barbotine, sur la couche de barbotine ou dans un plan de la couche de barbotine.

14. Procédé selon l'une des revendications précédentes, la densité du corps vert pouvant être obtenu avec le procédé atteignant au moins 55 % de la densité d'un solide sans pores comprenant le matériau de base céramique.
